# EUROPEAN PATENT APPLICATION

(11) **EP 4 575 940 A1**
(43) Date of publication of application: **25.06.2025**
(21) Application number: 23218038.0
(22) Date of filing: 19.12.2023
(51) Int. Cl.: G06Q 10/04, G06Q 50/06, E04B 1/74, F24F 11/46

(54) **SETTING UP ENERGY AND/OR AUTOMATION INFRASTRUCTURE UNDER CONTINUING OPTIMIZATION**

(71) Applicant: ABB SCHWEIZ AG, 5400 Baden (CH)
(72) Inventor: KARAAGAC, Abdulkadir, 68526 Ladenburg (DE); BISKOPING, Matthias, 69493 Hirschberg (DE); ALEKSY, Markus, 67065 Ludwigshafen (DE); BAUER, Philipp, 69469 Weinheim (DE); FOKKEN, Eike, 69214 Eppelheim (DE); GUTERMUTH, Georg, 69115 Heidelberg (DE); PRIMAS, Bernhard, 68165 Mannheim (DE); SCHLOEDER, Matthias, 69126 Heidelberg (DE)
(74) Representative: Maiwald GmbH

(57) **Abstract**

A method (100) for setting up energy and/or automation infrastructure (2) of a building and/or site (1), comprising the steps of:
• providing (110) at least one request (3) for a service that the building and/or site (1), and/or its energy and/or automation infrastructure (2), is to offer to its user (U);
• determining (120), based at least in part on all requests (3) for the services, a set of qualitative and quantitative requirements (4) for capabilities of the energy and/or automation infrastructure (2);
• creating (130), using energy and/or automation infrastructure assets (5) obtained from a given library (6), candidate set-ups (2a) that meet the set of qualitative and quantitative requirements (4) for capabilities;
• determining (140), for each such candidate set-up (2a), using a given merit function (7), a figure of merit (2b) with respect to one or more given optimization goals; and
• determining (150) a candidate set-up (2a) with the best figure of merit (2b) as the optimal set-up (2a*) to be realized in the energy and/or automation infrastructure of the building and/or site (1).

## Description

### FIELD OF THE INVENTION

The invention relates to the construction and ongoing improvement of energy and/or automation infrastructure for buildings and other types of sites.

### BACKGROUND

Virtually every building has installations that consume energy, such as electricity or gas, and therefore has energy infrastructure of some sort. Some buildings also comprise automation infrastructure. Building energy and automation infrastructures are integral to creating smart, efficient, and sustainable buildings that meet the needs of occupants while minimizing resource consumption and environmental impact.

The increasing diversity, complexity, and capabilities of building energy and control technologies pose challenges because they require a deep understanding of these technologies, careful planning, and the ability to make informed decisions about technology selection, integration, and capacity. Also, it's essential to fine-tune Building Energy and Control Systems to fit each building's unique features (size, setup etc.) and needs. The energy infrastructure is usually planned at the time of constructing the building. It is very much of an art because future needs must be foreseen, and later changes may become very costly. Today, all of these initial engineering and later upgrading processes and operations of such building energy and automation systems are typically expensive and time-consuming effort.

### OBJECTIVE OF THE INVENTION

It is therefore an objective of the present invention to provide a new method for setting up energy and/or automation infrastructure that can exploit a wide variety of available information and can, unlike the previous manual engineering, be easily computer-implemented.

This objective is achieved by a method according to the independent claim. Further advantageous embodiments are detailed in the dependent claims.

### DISCLOSURE OF THE INVENTION

The invention provides a method for setting up energy and/or automation infrastructure of a building and/or site. Herein, the term "setting up" may in particular refer to the planning of the respective infrastructure and to the sizing of its components that is a prerequisite for physically assembling the infrastructure. However, setting up may also comprise the providing of an initial configuration of one or more components, or a reconfiguration of such components.

In the course of the method, at least one request for a service that the building and/or site, and/or its energy and/or automation infrastructure, is to offer to its user is provided. In particular, there may be a list of many such requests, depending on how the building is planned to be used. Exemplary requested services include:
- achieving a minimum indoor temperature given a minimum outdoor temperature;
- achieving a maximum indoor temperature given a maximum outdoor temperature;
- achieving a minimum light level indoors given darkness outdoors;
- achieving a minimum and/or maximum humidity indoors;
- charging an electrically powered vehicle;
- controlling some functionality of the building automatically;
- keeping at least one state variable of the energy and/or automation infrastructure at a desired set-point; and
- a service rendered by running at least one electrical household appliance.

Based at least in part on all requests for the services, a set of qualitative and quantitative requirements for capabilities of the energy and/or automation infrastructure is determined. Exemplary capabilities comprise:
- the transfer of a minimum flow of heat into and/or out of the building;
- the releasing and/or absorbing of a minimum quantity of moisture;
- illumination with a minimum strength;
- the providing of a minimum power of electricity and/or another energy carrier at a particular place in or at the building and/or site;
- the ability to remotely control at least one component of the energy and/or automation infrastructure; and
- the presence of a household appliance that is capable of rendering the requested service.

In particular, the determining of the qualitative and quantitative requirements for capabilities may be further based on at least one physical and/or engineering property of the building and/or site. This may mean that one and the same request for a service may translate into very different requirements for capabilities. For example, it depends on the thermal properties of the building how much heating is needed to achieve a given minimum temperature inside when it is cold outside. Likewise, the thermal properties of the building determine how much cooling is needed to cool below a given maximum temperature when it is hot outside.

Thus, in a further particularly advantageous embodiment, the at least one physical and/or engineering property characterizes a conductive and/or radiative transfer of heat into the building and/or out of the building. In particular, the conductive and/or radiative transfer of heat may be governed by the properties of walls, doors, windows and insulation material on the walls.

Using energy and/or automation infrastructure assets from a given library, candidate set-ups that meet the set of qualitative and quantitative requirements for capabilities are created. For each such candidate set-up, using a given merit function, a figure of merit with respect to one or more given optimization goals is determined. A candidate set-up with the best figure of merit as the optimal set-up to be realized in the energy and/or automation infrastructure of the building and/or site.

It was found that in this manner, wishes for services that are usually formulated in a rather abstract manner and without knowledge of the assets that are available in the library may be transformed into an optimal set-up in an automated and reproducible manner. This saves time that was previously spent on manual work. It also means that the choice of the optimal set-up is made in a fully objective and transparent manner. This makes it meaningful to study how the optimal candidate set-up changes if one or more of the inputs based on which it was determined changes. That is, it is easy to recalculate the optimal set-up.

For example, the manner in which a building is used might not remain constant all the time. In particular, if the building is used by multiple tenants, tenants may change, and if a new tenant rents a space, his usage pattern may be completely different from that of the previous tenant. For example, the new tenant may use the space during different times of day and require different temperatures. Also, over time, the weather conditions may change. For example, a room that did not require air conditioning in the 1980s to be comfortable for a particular purpose during summer might not be usable for the same purpose at the same time of summer today.

By contrast, the previous manual optimization was performed once when first designing the energy and/or automation infrastructure, and not touched again. This meant that later changes could not be taken into account any more, and if assumptions on which the initial design was based changed, the infrastructure operated in a sub-optimal manner for the time to come.

In particular, a system implementing the method may operate fully autonomously after some initial user configuration. It may comprise at least a user interface to provide data for the requested services and system behavior; e.g. building information, heating requirements, etc.. The interface can be used to add all data which are not available to the system through other channels.

The system itself can obtain, from system internal database and learnings from similar buildings and sites, generic common data the user might not have. The system may also acquire additional information through further installed meters, which allows to monitor, predict, and analyze the requirements of the user automatically and provide directly the data the user had otherwise to provide manually, or which would have been taken from the internal database. Furthermore, the system may acquire additional data/information from external systems like energy prices, weather forecasts, changing asset prices, regulations, subsidies etc..

Based on this information pool, the system may continuously analyze if the overall system design, sizing and installation of assets and their configurations are optimal depending on the predefined target, e.g. overall cost, CO₂ footprint, comfort level or a combination of those aspects.

In particular, the system may use an "Energy Optimization and Optimal Energy Distribution System" as an underlying system to evaluate different scenarios in an inner optimization loop that covers the day-to-day operation. The optimal design and configuration may then be an outer loop around the real time energy optimization system, which can be configured with different setup. That is, the definition of those setups is an outer optimization loop finding the optimal configuration for the specific user based on all available information.

In line with the examples presented above, in a further particularly advantageous embodiment, the energy and/or automation infrastructure assets in the given library comprise one or more of:
- a heating and/or cooling installation and/or appliance;
- an air conditioning system;
- a thermal insulation of the building;
- an electricity generation facility;
- an energy storage facility;
- a lighting system;
- a charging point for an electrically powered vehicle; and
- a household appliance with an interface that permits remote control by the energy infrastructure of the building.

Herein, in particular, energy storage is not limited to batteries for storing electrical energy. Rather, energy may also be stored in form of heat, or in the form of gases such as hydrogen.

These and other assets are available in different sizes. For example, heating and/or cooling installations, as well as air conditioners, have a rated throughput of heat per hour. Energy storage facilities have rated capacities, and charging points are available with different levels of power (e.g., 11 kW AC, 22 kW AC or 150 kW DC). The optimization may comprise choosing the correct size of asset. This can be seamlessly integrated into the optimization by putting differently sized asset into the given library. Therefore, in a particularly advantageous embodiment, the library comprises, for at least one energy infrastructure asset, multiple versions that are sized differently with respect to energy throughput and/or consumption.

In a further particularly advantageous embodiment, the method further comprises monitoring the use of the service by the user, and/or energy usage in the building and/or site, and/or the validity of assumptions that have gone into merit function. Based on the results of this monitoring, the set of requirements for capabilities is then recomputed, and/or the merit function is modified. Then, a new optimal set-up is determined.

As discussed above, at the time at which the considerations for the energy and/or automation infrastructure are usually made, they are based on assumptions that turn out to be inaccurate later, or are just outdated. The method presented here allows to react to any changes in these assumptions, so that the energy and/or automation infrastructure can be brought to a state that is a new optimal state under the changed conditions.

For example, having electricity rates that vary from hour to hour depending on the EPEX Spot day-ahead market price is the more advantageous the better one can move a large fraction of the total consumption into hours where electricity is cheaper. If this is initially the case, but then the usage habits shift so that more consumption happens in the most expensive hours, this rate plan may no longer be the most appropriate one. Also, external factors may cause changes to assumptions in the merit function, or even directly to the merit function. For example, for a long time, heating installations fueled by natural gas were economical and were also advocated as being relatively climatefriendly compared with other forms of heating. In the European energy crisis of 2022, the prices for natural gas skyrocketed, and citizens were urged to conserve gas wherever possible. In addition, more and more nations are constraining or even forbidding the installation of new heating installations that consume fossil fuels.

In particular, the monitoring comprises obtaining information about the use of the service by the user, and/or energy usage in the building, from a building automation system that governs the running of the energy infrastructure assets. That is, information that is already available in the building automation system may be re-used for another purpose. Alternatively or in combination to this, the operation of the energy and/or automation infrastructure may be optimized by means of the building automation system given a candidate set-up. That is, the building automation system may perform an "inner optimization loop" that runs a given set-up of the energy and/or automation infrastructure in day-to-day operation, whereas the optimization of the set-up according to the method proposed here forms an "outer optimization loop" that changes the setup. With the combination of both optimization loops, the search for a global optimum may be driven beyond the mere optimization of day-to-day operation to which the "inner optimization loop" is confined. At the same time, when optimizing the set-up in the "outer optimization loop", vital information may be obtained by running the "inner optimization loop" on a candidate set-up. In particular, this allows to search for an optimum under the constraint that the building automation system itself stays the same. For example, the set-up of the infrastructure on the one hand, and the building automation system on the other hand, may be managed by distinct entities.

When using said "inner optimization loop" of the building automation system in the course of determining how good a candidate set-up really is, that candidate set-up may, for example, be presented as an emulation of the real hardware to the building automation system. In this manner, multiple instances of the building automation system may perform the "inner optimization loop" on multiple candidate configurations in parallel. Because this analysis is independent of any real system, it is not timecritical, and can therefore be executed locally or in the cloud.

That is, the method may use the available information to create virtual assets and or scale existing assets virtually to provide real time as well as "what-if" analysis depending on the actual user behavior allowing to quickly analyze the effectiveness of certain system changes in real time. The method may perform this analysis for historic as well as forecasted user behavior. The forecast can be based on the historic data using e.g. neural networks or it depends on library entries of similar buildings and sites.

In particular, the method may compile the advantages of a changed setup and presents it to the user on a user selectable interval or when certain thresholds are reached. So users can make informed decisions without the need of an energy expert that evaluates their individual case specifically.

In a further particularly advantageous embodiment, the energy and/or automation infrastructure assets in the given library comprise one or more of:
- a controller for the building automation system that has an extended functionality compared with an existing controller; and
- an additional sensor for the monitoring of the use of the service, and/or of the energy usage in the building.
In this manner, the "outer optimization loop" with the method presented here may permanently improve the "inner optimization loop" as well through the improved functionality of the new controller, and/or of the additional sensor.

In a further particularly advantageous embodiment, the merit function is dependent on one or more of:
- energy costs incurred by at least one energy and/or automation infrastructure asset in the candidate set-up;
- availability of energy needed by at least one energy and/or automation infrastructure asset in the candidate set-up;
- a cost for realizing the candidate set-up in the energy and/or automation infrastructure of the building and/or site given a set of energy and/or automation infrastructure assets that are already available;
- a remaining service life of at least one energy and/or automation infrastructure asset; and
- a total cost of ownership of the energy and/or automation infrastructure of the building.
In particular, some optimization goals may need to be balanced against each other. The method proposed here facilitates this because it allows the improvement to come from any source.

For example, if an electric vehicle is present, this may be very advantageous in combination with an energy rate plan whose prices depend on EPEX Spot day-ahead market prices, or even shorter-term market prices. If the vehicle is charged predominantly at times where the rate is low, the savings compared with operation of a conventionally-fueled vehicle may be huge. In certain hours with negative prices, the electric vehicle may actually earn money by charging. However, there are only few golden hours with very low or even negative prices in a typical day, so to make best use of them, one should charge with as much power as possible. This may mean that upgrading from an 11 kWAC charging point to a 22 kWAC charging point, or even to a 150 kW DC charging point, may pay for itself even if it means having to dig open the road for installing a stronger mains connection.

In a particularly advantageous embodiment, the merit function is computed over a predetermined temporal optimization horizon. The balance between different optimization goals may depend on this temporal optimization horizon. In particular, the temporal optimization horizon may come into play when considering the remaining service life of at least one asset. For example, continuing to use an old asset with a lower energy efficiency may be economical in the short run, but from a certain temporal horizon on, it may pay for itself to switch to a new, more energy-efficient asset.

In a further particularly advantageous embodiment, requirements for capabilities relate to at least two distinct forms of energy, such as electricity and heat. The library comprises at least one energy and/or automation infrastructure asset that produces these at least two distinct forms of energy in combination. In this manner, synergy effects that arise from producing both forms of energy in combination may be exploited. For example, the combined generation of electricity and heat may yield a very high energy efficiency from the combustion of one single fuel.

The ultimate goal of computing an optimal set-up for the energy and/or automation infrastructure is to actually benefit from this optimal set-up during operation of the energy and/or automation infrastructure. Therefore, in a further particularly advantageous embodiment, the method further comprises: combining, in the physical energy and/or automation infrastructure of the building and/or site, the physical energy and/or automation infrastructure assets according to the determined optimal set-up, thereby putting this optimal set-up into practice.

Because it is computer-implemented, the present method may be embodied in the form of a software. The invention therefore also relates to a computer program with machine-readable instructions that, when executed by one or more computers and/or compute instances, cause the one or more computers and/or compute instances to perform the method described above. Examples for compute instances include virtual machines, containers or serverless execution environments in a cloud. The invention also relates to a machine-readable data carrier and/or a download product with the computer program. A download product is a digital product with the computer program that may, e.g., be sold in an online shop for immediate fulfilment and download to one or more computers. The invention also relates to one or more compute instances with the computer program, and/or with the machine-readable data carrier and/or download product.

### DESCRIPTION OF THE FIGURES

In the following, the invention is illustrated using Figures without any intention to limit the scope of the invention. The Figures show:
Figure 1: Exemplary embodiment of the method 100 for setting up energy and/or automation infrastructure 2 of a building and/or site 1;
Figure 2: Exemplary illustration of the wide variety of data sources 1a-1f, 5a of which the method 100 may avail itself;
Figure 3: Exemplary illustration of an outer optimization loop performed by the method 100 around an inner optimization loop performed by a given automation system 8.

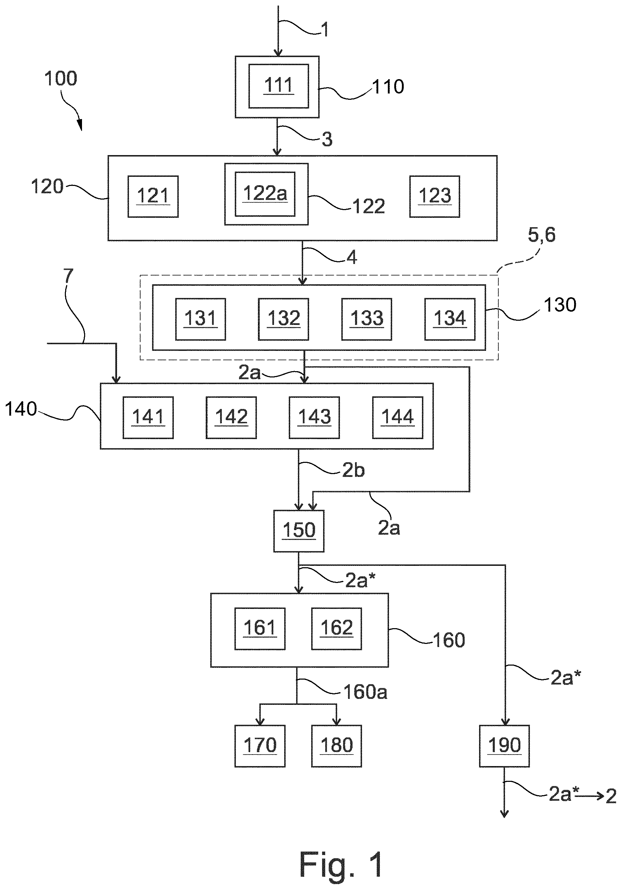

Figure 1 shows an exemplary embodiment of the method 100 for setting up energy and/or automation infrastructure 2 of a building and/or site 1.

In step 110, at least one request 3 for a service that the building and/or site 1, and/or its energy and/or automation infrastructure 2, is to offer to its user U.

According to block 111, the requested service may comprise one or more of:
- achieving a minimum indoor temperature given a minimum outdoor temperature;
- achieving a maximum indoor temperature given a maximum outdoor temperature;
- achieving a minimum light level indoors given darkness outdoors;
- achieving a minimum and/or maximum humidity indoors;
- charging an electrically powered vehicle;
- controlling some functionality of the building automatically;
- keeping at least one state variable of the energy and/or automation infrastructure at a desired set-point; and
- a service rendered by running at least one electrical household appliance.

In step 120, based at least in part on all requests 3 for the services, a set of qualitative and quantitative requirements 4 for capabilities of the energy and/or automation infrastructure 2 is determined.

According to block 121, the requirements 4 for capabilities may comprise one or more of:
- the transfer of a minimum flow of heat into and/or out of the building;
- the releasing and/or absorbing of a minimum quantity of moisture;
- illumination with a minimum strength;
- the providing of a minimum power of electricity and/or another energy carrier at a particular place in or at the building and/or site;
- the ability to remotely control at least one component of the energy and/or automation infrastructure; and
- the presence of a household appliance that is capable of rendering the requested service.

According to block 122, the determining of the qualitative and quantitative requirements 4 for capabilities may be further based on at least one physical and/or engineering property 1a of the building and/or site 1.

According to block 122a, the at least one physical and/or engineering property 1a may characterize a conductive and/or radiative transfer of heat into the building 1 and/or out of the building 1.

According to block 123, requirements 4 for capabilities may relate to at least two distinct forms of energy, such as electricity and heat.

In step 130, using energy and/or automation infrastructure assets 5 obtained from a given library 6, candidate set-ups 2a that meet the set of qualitative and quantitative requirements 4 for capabilities are created.

According to block 131, the energy and/or automation infrastructure assets 5 in the given library 6 may comprise one or more of:
- a heating and/or cooling installation and/or appliance;
- an air conditioning system;
- a thermal insulation of the building;
- an electricity generation facility;
- an energy storage facility;
- a lighting system;
- a charging point for an electrically powered vehicle; and
- a household appliance with an interface that permits remote control by the energy infrastructure of the building.

As discussed before, in particular, the energy storage facility may also store other energy forms than electricity, such as heat, electrolyzed gases, or liquids produced with a power-to-liquid method.

According to block 132, the library 6 may comprise, for at least one energy infrastructure asset 5, multiple versions that are sized differently with respect to energy throughput and/or consumption. As discussed before, this facilitates incorporating the correct sizing into the optimization of the set-up 2a.

According to block 133, the energy and/or automation infrastructure assets 5 in the given library 6 may comprise one or more of:
- a controller for the building automation system that has an extended functionality compared with an existing controller; and
- an additional sensor for the monitoring of the use of the service, and/or of the energy usage in the building 1.

If requirements 4 for capabilities relate to at least two distinct forms of energy according to block 123, then, according to block 134, the library 6 may comprise at least one energy and/or automation infrastructure asset 5 that produces these at least two distinct forms of energy in combination.

In step 140, for each candidate set-up 2a produced in step 130, using a given merit function 7, a figure of merit 2b with respect to one or more given optimization goals is determined.

According to block 141, when determining the figure of merit 2b, information about the use of the service by the user, and/or energy usage in the building 1, may be obtained from a building automation system 8 that governs the running of the energy infrastructure assets. Alternatively or in combination to this, according to block 142, by means of the building automation system 8, the operation of the energy and/or automation infrastructure 2 may be optimized given a candidate set-up 2a. This is the "inner optimization loop" discussed before, and around this, the method 100 wraps an "outer optimization loop" that selects, from many candidate set-ups 2a, an optimal setup 2a*.

According to block 143, the merit function 7 may be dependent on one or more of:
- energy costs incurred by at least one energy and/or automation infrastructure asset 5 in the candidate set-up 2a;
- availability of energy needed by at least one energy and/or automation infrastructure asset 5 in the candidate set-up 2a;
- a cost for realizing the candidate set-up 2a in the energy and/or automation infrastructure 2 of the building and/or site 1 given a set of energy and/or automation infrastructure assets 5 that are already available;
- a remaining service life of at least one energy and/or automation infrastructure asset 5; and
- a total cost of ownership of the energy and/or automation infrastructure 2 of the building and/or site 1.

According to block 144, the merit function 7 may be computed over a predetermined temporal optimization horizon.

In step 150, a candidate set-up 2a with the best figure of merit 2b is determined as the optimal set-up 2a* to be realized in the energy and/or automation infrastructure of the building and/or site 1.

In the example shown in Figure 1, in step 160, the use of the service by the user, and/or energy usage in the building and/or site 1, and/or the validity of assumptions that have gone into the merit function 7, may be monitored.

According to block 161, when monitoring the use of the service by the user, and/or energy usage in the building and/or site 1, and/or the validity of assumptions that have gone into the merit function 7 information about the use of the service by the user, and/or energy usage in the building 1, may be obtained from a building automation system 8 that governs the running of the energy infrastructure assets. Alternatively or in combination to this, according to block 162, by means of the building automation system 8, the operation of the energy and/or automation infrastructure 2 may be optimized given a candidate set-up 2a. This is the "inner optimization loop" discussed before, and around this, the method 100 wraps an "outer optimization loop" that selects, from many candidate set-ups 2a, an optimal set-up 2a*.

The result 160a of the monitoring 160 may be used in various ways. In Figure 1, two examples are shown.

In step 170, the set of requirements 4 for capabilities may be recomputed based on the monitoring result 160a. Alternatively or in combination to this, in step 180, the merit function 7 may be modified based on the monitoring result 160a.

In the example shown in Figure 1, in step 190, in the physical energy and/or automation infrastructure 2 of the building and/or site 1, the physical energy and/or automation infrastructure assets 5 are combined according to the determined optimal set-up 2a. In this manner, this optimal set-up 2a* is put into practice.

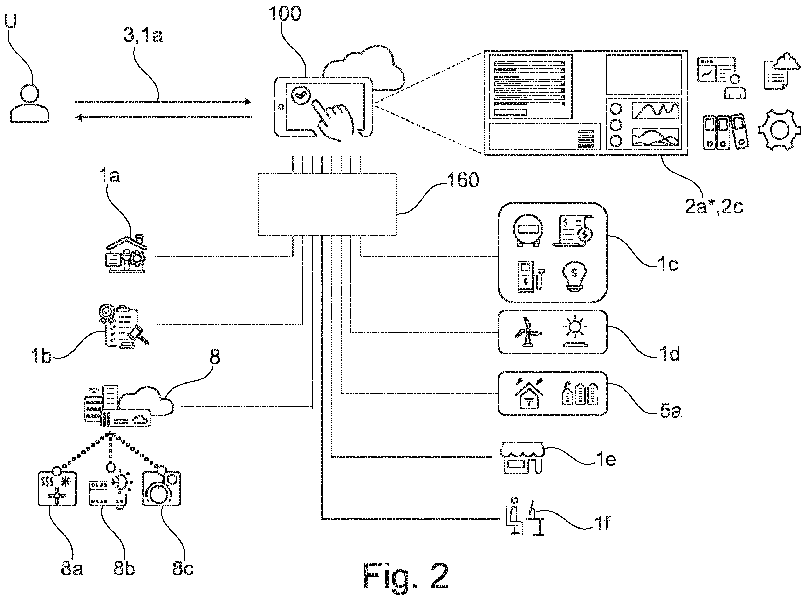

Figure 2 illustrates an exemplary use case of the method 100. In this example, the method 100 is embodied in a recommendation tool with a user interface with which the user U may communicate.

The user U inputs requirements 3 for services and may optionally also input physical and/or engineering properties 1a. To the extent that these properties are not inputted by the user U, the continuous monitoring and data collection according to step 160 of the method 100 may collect them, just like it can collect other items of information such as:
- regulations and laws 1b governing the set-up and use of energy and/or automation infrastructure 2;
- consumption data 1c recorded by one or more meters;
- production data 1d of any energy-producing components in the energy and/or automation infrastructure 2;
- equipment and energy data and prices 1e; and
- information 1f inputted by live and/or remote support.

On top of this, the recommendation tool implementing the method 100 communicates with a building/home automation system 8 that governs the operation of exemplary appliances 8a-8c. It also ingests asset capacity and health data 5a of the assets 5 in the library 6.

Apart from optimal set-ups 2a, the method 100 may also output recommendations 2c as the outcome of the optimization and the infrastructure analysis and evaluation. For example, the method 100 may also detect anomalies in the operation of the energy and/or automation infrastructure 2.

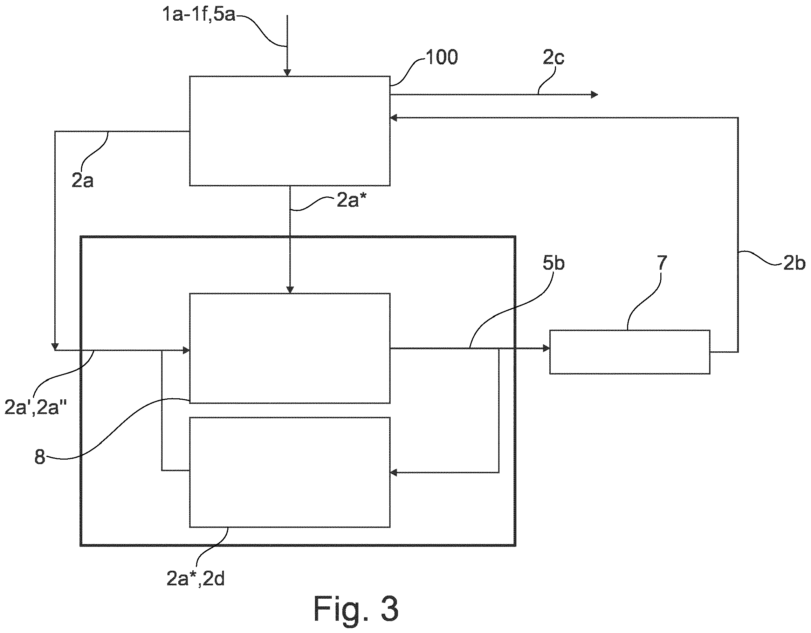

Figure 3 illustrates how the "inner optimization loop" performed by an existing building automation system 8 given a set-up 2a may be combined with an "outer optimization loop" according to the method 100 that outputs optimal set-ups 2a*.

Given each candidate set-up 2a, 2a', 2a", the automation system 8 runs the assets 5 in each set-up 2a, 2a', 2a" in an optimal manner. For example, it may issue new set-points 5b to controllable assets 5 to change their behavior. The merit function 7 determines a figure of merit 2b that may, in particular, comprise one or more key performance indicators, KPI. For every tested set-up 2a, 2a', 2a", an emulation 2d is created. The automation system 8 may interact with this emulation 2d as if it was actual hardware, so that it may be determined whether this set-up 2a, 2a', 2a", after the inner optimization by the automation 8, delivers a better final figure of merit 2b than the previous set-ups. That is, the outer optimization loop performed by the method 100 varies the set-up 2a, 2a', 2a" until, when this set-up 2a, 2a', 2a" is run by the automation system 8, the best figure of merit results.

In the example shown in Figure 3, the method 100 uses the inputs 1a-1f and 5a illustrated in Figure 2. Akin to Figure 2, on top of the optimal set-up 2a*, the method 100 may also output recommendations 2c for operating it.

### List of reference signs:

- 1: building and/or site;
- 1a: physical and/or engineering properties
- 1b: regulations and laws
- 1c: consumption data
- 1d: production data
- 1e: equipment and energy data and prices
- 1f: data from live/remote support
- 2: energy and/or automation infrastructure
- 2a: set-up of energy and/or automation infrastructure 2;
- 2a*: optimal set-up
- 2b: figure of merit, outputted by merit function 7
- 2c: recommendations
- 2d: emulation of set-up 2a in virtual hardware
- 3: requests for services
- 4: requirements for capabilities
- 5: energy and/or automation infrastructure assets
- 5a: asset capacity and health data of assets 5
- 5b: new set-points for controllable assets 5
- 6: library of assets 5
- 7: merit function
- 8: building automation system
- 8a-8c: assets run by automation system 8
- 100: method for setting up energy/automation infrastructure 2
- 110: providing at least one request 3 for service
- 111: specific requests 3 for services
- 120: determining qualitative and quantitative requirements 4
- 121: specific requirements 4
- 122: using physical and/or engineering properties 1a
- 122a: using heat transfer as property 1a
- 123: using requirements 4 relating to different forms of energy
- 130: creating candidate set-ups 2a
- 131: specific assets 5
- 132: using multiple, differently sized versions of one and the same asset 5
- 133: specific assets 5 that are part of the automation system 8
- 134: assets 5 that produce multiple different forms of energy
- 140: determining figure of merit 2b
- 141: obtaining information about use, energy usage
- 142: optimizing with automation system 8
- 143: specific dependencies of merit function 7
- 144: computation over predetermined time horizon
- 150: determining optimal set-up 2a*
- 160: ongoing monitoring and collection of data
- 160a: result of monitoring/data collection 160
- 161: obtaining information about use, energy usage
- 162: optimizing with automation system 8
- 170: recomputing set of requirements 4
- 180: modifying merit function 7
- 190: putting optimal configuration 2a* into practice by implementing it
- U: user

## Claims

1. A method (100) for setting up energy and/or automation infrastructure (2) of a building and/or site (1), comprising the steps of:
• providing (110) at least one request (3) for a service that the building and/or site (1), and/or its energy and/or automation infrastructure (2), is to offer to its user (U);
• determining (120), based at least in part on all requests (3) for the services, a set of qualitative and quantitative requirements (4) for capabilities of the energy and/or automation infrastructure (2);
• creating (130), using energy and/or automation infrastructure assets (5) obtained from a given library (6), candidate set-ups (2a) that meet the set of qualitative and quantitative requirements (4) for capabilities;
• determining (140), for each such candidate set-up (2a), using a given merit function (7), a figure of merit (2b) with respect to one or more given optimization goals; and
• determining (150) a candidate set-up (2a) with the best figure of merit (2b) as the optimal set-up (2a*) to be realized in the energy and/or automation infrastructure of the building and/or site (1).

2. The method (100) of claim 1, wherein the requested service comprises (111) one or more of:
• achieving a minimum indoor temperature given a minimum outdoor temperature;
• achieving a maximum indoor temperature given a maximum outdoor temperature;
• achieving a minimum light level indoors given darkness outdoors;
• achieving a minimum and/or maximum humidity indoors;
• charging an electrically powered vehicle;
• controlling some functionality of the building automatically;
• keeping at least one state variable of the energy and/or automation infrastructure at a desired set-point; and
• a service rendered by running at least one electrical household appliance.

3. The method (100) of any one of claims 1 to 2, wherein the requirements (4) for capabilities comprise (121) one or more of:
• the transfer of a minimum flow of heat into and/or out of the building;
• the releasing and/or absorbing of a minimum quantity of moisture;
• illumination with a minimum strength;
• the providing of a minimum power of electricity and/or another energy carrier at a particular place in or at the building and/or site;
• the ability to remotely control at least one component of the energy and/or automation infrastructure; and
• the presence of a household appliance that is capable of rendering the requested service.

4. The method (100) of any one of claims 1 to 3, wherein the energy and/or automation infrastructure assets (5) in the given library (6) comprise (131) one or more of:
• a heating and/or cooling installation and/or appliance;
• an air conditioning system;
• a thermal insulation of the building;
• an electricity generation facility;
• an energy storage facility;
• a lighting system;
• a charging point for an electrically powered vehicle; and
• a household appliance with an interface that permits remote control by the energy infrastructure of the building.

5. The method (100) of any one of claims 1 to 4, wherein the determining of the qualitative and quantitative requirements (4) for capabilities is further based (122) on at least one physical and/or engineering property (1a) of the building and/or site (1).

6. The method (100) of claim 5, wherein the at least one physical and/or engineering property (1a) characterizes (122a) a conductive and/or radiative transfer of heat into the building (1) and/or out of the building (1).

7. The method (100) of any one of claims 1 to 6, wherein the library (6) comprises (132), for at least one energy infrastructure asset (5), multiple versions that are sized differently with respect to energy throughput and/or consumption.

8. The method (100) of any one of claims 1 to 7, further comprising:
• monitoring (160) the use of the service by the user, and/or energy usage in the building and/or site (1), and/or the validity of assumptions that have gone into the merit function (7);
• based on the results (160a) of this monitoring (160), recomputing (170) the set of requirements (4) for capabilities, and/or modifying (180) the merit function (7); and
• computing (140) a new optimal set-up (2a*).

9. The method (100) of any one of claims 1 to 8, wherein the monitoring (160) , and/or the determining (140) of the figure of merit (2b), comprises
• obtaining (141, 161) information about the use of the service by the user, and/or energy usage in the building (1), from a building automation system (8) that governs the running of the energy infrastructure assets; and/or
• optimizing (142, 162), by means of the building automation system (8), the operation of the energy and/or automation infrastructure (2) given a candidate set-up (2a).

10. The method (100) of claim 9, wherein the energy and/or automation infrastructure assets (5) in the given library (6) comprise (133) one or more of:
• a controller for the building automation system that has an extended functionality compared with an existing controller; and
• an additional sensor for the monitoring of the use of the service, and/or of the energy usage in the building (1).

11. The method (100) of any one of claims 1 to 10, wherein the merit function (7) is dependent (143) on one or more of:
• energy costs incurred by at least one energy and/or automation infrastructure asset (5) in the candidate set-up (2a);
• availability of energy needed by at least one energy and/or automation infrastructure asset (5) in the candidate set-up (2a);
• a cost for realizing the candidate set-up (2a) in the energy and/or automation infrastructure (2) of the building and/or site (1) given a set of energy and/or automation infrastructure assets (5) that are already available;
• a remaining service life of at least one energy and/or automation infrastructure asset (5); and
• a total cost of ownership of the energy and/or automation infrastructure (2) of the building and/or site (1).

12. The method (100) of any one of claims 1 to 11, wherein the merit function (7) is computed (144) over a predetermined temporal optimization horizon.

13. The method (100) of any one of claims 1 to 12, wherein
• requirements (4) for capabilities relate (123) to at least two distinct forms of energy; and
• the library (6) comprises at least one energy and/or automation infrastructure asset (5) that produces these at least two distinct forms of energy in combination.

14. The method of any one of claims 1 to 13, further comprising: presenting at least one candidate set-up (2a) to a building automation system (8) of the building as an emulation of the real hardware of the energy and/or automation infrastructure (2), so that the building automation system (8) can interact with this emulation as if it was actual hardware.

15. The method of any one of claims 1 to 14, further comprising: combining (190), in the physical energy and/or automation infrastructure (2) of the building and/or site (1), the physical energy and/or automation infrastructure assets (5) according to the determined optimal set-up (2a*), thereby putting this optimal set-up (2a*) into practice.

16. A computer program, comprising machine-readable instructions that, when executed by one or more computers and/or compute instances, cause the one or more computers and/or compute instances to perform the method (100) of any one of claims 1 to 14.

17. A non-transitory machine-readable data carrier and/or a download product with the computer program of claim 16.

18. One or more computers and/or compute instances with the computer program of claim 16, and/or with the machine-readable data carrier and/or download product of claim 17.
